# EUROPÄISCHE PATENTSCHRIFT

(11) **EP 4 015 206 B1**
(45) Veröffentlichungstag und Bekanntmachung des Hinweises auf die Patenterteilung: **13.09.2023**
(21) Anmeldenummer: 21211682.6
(22) Anmeldetag: 01.12.2021
(51) Int. Cl.: B29D 30/72, B29D 30/08, B29D 30/00, B29D 30/52

(54) **VERFAHREN UND VORRICHTUNG ZUR HERSTELLUNG VON MINDESTENS ZWEI PROFILEN FÜR EINEN FAHRZEUGREIFEN**
METHOD AND DEVICE FOR PRODUCING AT LEAST TWO PROFILES FOR A VEHICLE TYRE
PROCÉDÉ ET DISPOSITIF DE FABRICATION D'AU MOINS DEUX PROFILÉS POUR UN PNEU DE VÉHICULE

(30) Priorität: 21.12.2020 DE 102020216366
(43) Veröffentlichungstag der Anmeldung: 22.06.2022
(73) Patentinhaber: Continental Reifen Deutschland GmbH, 30165 Hannover (DE)
(72) Erfinder: Sharifi, Monir, 30165 Hannover (DE); De Riva-Perez, Julian, 30165 Hannover (DE); Xu, Chengcai, 30165 Hannover (DE)
(74) Vertreter: Continental Corporation

(56) Entgegenhaltungen:
- WO-A1-2015/028166
- DE-A1-102018 219 640
- DE-A1-102019 208 750

## Beschreibung

Die Erfindung betrifft ein Verfahren zur Herstellung von mindestens zwei Profilen für einen Fahrzeugreifen gemäß dem Oberbegriff des Patentanspruchs 1. Ferner betrifft die Erfindung eine Vorrichtung zur Herstellung von mindestens zwei Profilen für einen Fahrzeugreifen gemäß dem Oberbegriff des Patentanspruchs 7.

In der Herstellung eines Fahrzeugreifens ist es üblich, einige Bauteile, die identisch sein sollen und zumindest zweimal im Fahrzeugreifen verbaut werden, in möglichst wenigen Verfahrensschritten herzustellen. Beispielhaft dafür sind Profile, wie zum Beispiel Seitenwandprofile oder Verstärkungen für die Seitenwände, wobei Laufstreifenprofile ebenfalls durch ein solches Verfahren hergestellt werden können. Im Stand der Technik sind Verfahren zur Herstellung von Profilen bekannt. Profile umfassen üblicherweise mindestens eine Komponente, wobei jede Komponente aus mindestens einer Kautschukmischung besteht. Im Stand der Technik werden die im Wesentlichen identischen Komponenten der beiden Profile aus einem Fahrzeugreifen in einem Extruder hergestellt. Dazu wird eine Kautschukmischung in dem einen Extruder extrudiert, aufgeteilt und anschließend zu zwei identische Komponenten für beide Profile weiterverarbeitet. Nachteilig der im Stand der Technik beschriebenen Verfahren ist, dass die Eigenschaften der extrudierten Kautschukmischungen aufgrund der derzeitigen Prozessführung untereinander schwanken, sodass die beiden Profile letztendlich in einigen Aspekten unterschiedlich sind. Unter anderem unterscheiden sich die beiden Profile in Bezug auf das Gewicht oder die Geometrie, sodass dadurch letztendlich die Qualität des Fahrzeugreifens verschlechtert wird.

Die Patentschrift WO 2015/028166 A1 offenbart ein Verfahren zur Herstellung einer extrudierten Materiallage aus Elastomermaterial mit zwei parallel betriebenen Extrudern, wobei die Materiallage im Querschnitt nach dem Extrusionsprozess Materialbereich mit unterschiedlichen Gummimischungen aufweist.

Hier setzt die vorliegende Erfindung an. Es ist die Aufgabe der vorliegenden Erfindung ein Verfahren zur Herstellung von mindestens zwei Profilen eines Fahrzeugreifens bereitzustellen, durch das die Qualität der einzelnen Profile und der Fahrzeugreifen insgesamt verbessert wird. Ferner ist es die Aufgabe der vorliegenden Erfindung eine Vorrichtung zur Herstellung von mindestens zwei Profilen eines Fahrzeugreifens bereitzustellen, welche die Qualität einzelner Profile im Herstellungsprozess verbessert.

Gelöst wird die Aufgabe durch ein Verfahren zur Herstellung von mindestens zwei Profilen eines Fahrzeugreifens mit den Merkmalen des Patentanspruchs 1 sowie durch eine Vorrichtung zur Herstellung von mindestens zwei Profilen eines Fahrzeugreifens mit den Merkmalen des Patentanspruchs 7.

Gelöst wird die Aufgabe durch ein Verfahren zur Herstellung von mindestens zwei Profilen eines Fahrzeugreifens, wobei mindestens das erste und zweite Profil jeweils mindestens eine Komponente umfassen und parallel hergestellt werden, umfassend die folgenden Schritte:
1a) Herstellen der mindestens einen Komponente des ersten Profils durch Extrudieren mindestens einer ersten Kautschukmischung,
1b) Herstellen des ersten Profils, welches die mindestens eine Komponente aufweist, die mindestens die erste Kautschukmischung umfasst,
2a) Herstellen der mindestens einen Komponente des zweiten Profils durch Extrudieren mindestens einer zweiten Kautschukmischung und
2b) Herstellen des zweiten Profils, welches die mindestens eine Komponente aufweist, die mindestens die zweite Kautschukmischung umfasst.

Ein wesentlicher Vorteil der vorliegenden Erfindung ist, dass die Verfahrensschritte beider Profile unabhängig voneinander angepasst werden können. Durch das parallele unabhängige Extrudieren der Kautschukmischung der Komponenten der einzelnen Profile können die Parameter einzeln angepasst werden. Beispielsweise kann die Temperatur in dem Extruder für das erste Profil unabhängig vom zweiten Extruder für das zweite Profil verändert werden. Ferner ist es möglich, die Geometrie oder das Gewicht beider Profile einfacher anzupassen. Durch das erfindungsgemäße Verfahren können die beiden Profile besser unabhängig und individuell aneinander angepasst werden, wodurch sich die Qualität des Fahrzeugreifens letztendlich deutlich verbessert.

Im Sinne des erfindungsgemäßen Verfahrens sind die Komponenten als jeweils ein endloser Kautschukstreifen ausgebildet, die in zwei unabhängigen zumindest im Wesentlichen parallelen Fertigungslinien hergestellt werden. Unter parallel wird vorliegend verstanden, dass die Verfahrensschritte für die Herstellung des ersten Profils und des zweiten Profils im Wesentlichen simultan oder zeitgleich erfolgen. Dies ist wesentlich, da die zwei fertigen identischen Profile anschließend in einem Fahrzeugreifen möglichst simultan verbaut werden und dafür eine möglichst gleiche Qualität aufweisen sollen.

Ferner sind im Sinne der Erfindung vorzugsweise die Profile gemeint, die zumindest doppelt in einem Fahrzeugreifen verbaut werden und dafür möglichst identische Eigenschaften aufweisen sollen, wobei das erfindungsgemäße Verfahren nicht auf solche beschränkt sein soll. Beispielhaft können Seitenwandprofile oder Verstärkungen für die Seitenwände hergestellt werden, wobei sich die Erfindung vorzugsweise auch auf andere Profile, wie Laufstreifenprofile, richtet.

Erfindungsgemäß erfolgt der Schritt 1a) und 2a) in zwei separaten Extrudern, die nicht als ein Bauteil ausgebildet sind. Die beiden Kautschukmischungen werden in diesen unabhängig und parallel hergestellt, wobei auch die Steuerung der beiden Extruder unabhängig voneinander erfolgen kann. Eine unabhängige Steuerung der beiden Fertigungslinien ist vorteilhaft, da die Eigenschaften der beiden Profile individuell aneinander angepasst werden können.

In einer bevorzugten Ausführungsform sind die mindestens erste Kautschukmischung und die mindestens zweite Kautschukmischung identisch. Der Herstellungsprozess des ersten und des zweiten Profils erfolgt im Wesentlichen parallel, während in jedem Extruder identische Kautschukmischungen zu jeweils einer Komponente verarbeitet werden.

Ferner bevorzugt sind die mindestens eine Komponente des ersten Profils und die mindestens eine Komponente des zweiten Profils identisch, wobei vorzugsweise das erste und zweite Profil identisch sind. Vorteilhafterweise können beide identischen Profile parallel unabhängig voneinander hergestellt werden. Die Profile können im Herstellungsprozess angepasst werden, sofern Abweichungen in Bezug auf einzelne Parameter, beispielsweise das Gewicht oder die Geometrie, vorliegen.

Weiterhin bevorzugt werden die erste und zweite extrudierte Kautschukmischung und/oder das erste und zweite Profil einem Schrumpfprozess unterworfen. Unter eine Schrumpfprozess wird vorliegend verstanden, dass sich das Material zusammenzieht. Ein solcher Schrumpfprozess kann beispielsweise direkt nach dem Extruder erfolgen. Dafür wird der endlose Kautschukstreifen beispielsweise auf eine Rollenbahn mit mehreren Rollen gebracht, wobei die Rollenbahn vorzugsweise eine Schrumpfrollenbahn ist. Die Rollen drehen sich üblicherweise vorwärts, um den Endlosstreifen vorwärts zu bewegen, wobei das Schrumpfen durch unterschiedliche Rollengeschwindigkeiten und/oder Rollendurchmesser erfolgt. Die fertigen Profile werden nachträglich einem Schrumpfprozess unterworfen, um kleine Abweichungen in Bezug auf die Geometrie oder das Gewicht auszugleichen. In einer besonders bevorzugten Ausführungsform ist der ersten Fertigungslinie und der zweiten Fertigungslinie eine unabhängige Schrumpfrollenbahn zugeordnet, wodurch der erste Endlosstreifen unabhängig vom zweiten Endlosstreifen einem Schrumpfprozess unterworfen werden kann. Somit kann die Herstellung jedes Profils individuell gesteuert werden.

In einer weiteren bevorzugten Ausführungsform sind mindestens zwei parallele Verfahrensschritte mittels einer Steuereinheit steuerbar, wobei vorzugsweise mindestens ein Verfahrensschritt des ersten Profils von mindestens einem des zweiten Profils separat steuerbar ist. Die Steuereinheit ist dazu ausgebildet, dass die unabhängigen Prozesse zur Herstellung des ersten und des zweiten Profils gesteuert werden können. Die Steuerung dient der Anpassung einzelner Parameter, wie beispielsweise der Geometrie des Profils, Gewicht, Temperatur im Extruder oder der Schrumpfung. Eine Temperaturänderung kann beispielsweise über eine Heizeinheit erfolgen, die durch die Steuereinheit gesteuert wird. Die Steuereinheit kann ferner beispielsweise die Geschwindigkeit der einzelnen Rollen der Schrumpfrollenbahn steuern, wodurch der Endlosstreifen einem Schrumpfprozess unterworfen werden kann. Außerdem kann der Prozess im Extruder gesteuert werden, indem mehr oder weniger Kautschukmaterial dem Extruder hinzugegeben wird, wodurch sich das Gewicht und insbesondere die Geometrie des extrudierten Endlosstreifens verändern kann. Ferner ist die finale Verarbeitung zu einem Profil ebenfalls steuerbar, wobei jedes Profil unabhängig voneinander steuerbar ist. Besonders bevorzugt sind einige für das Verfahren wesentliche Parameter steuerbar, wobei mindestens ein Parameter ausgewählt ist aus der Gruppe bestehend aus Gewicht, Druck, Geometrie und Temperatur.

Die erfindungsgemäße Aufgabe wird ferner durch eine Vorrichtung zur Herstellung von mindestens zwei Profilen eines Fahrzeugreifens gelöst, umfassend jeweils eine Fertigungslinie für die parallele Herstellung eines jeden Profils mit jeweils mindestens einer Komponente, wobei die erste Fertigungslinie mindestens einen ersten Extruder zur Herstellung der mindestens einen Komponente des ersten Profils und mindestens eine erste Fertigungseinheit zur Fertigung des ersten Profils aus den Komponenten umfasst und die zweite Fertigungslinie mindestens einen zweiten Extruder zur Herstellung der Komponente des zweiten Profils und mindestens eine zweite Fertigungseinheit zur Fertigung des zweiten Profils umfasst.

Die erfindungsgemäße Vorrichtung erlaubt es die Eigenschaften sowohl der Komponenten als auch der Profile individuell einzustellen. Vorteilhafterweise können zwei Profile unabhängig voneinander hergestellt und dadurch individuell in Bezug auf ihre Parameter eingestellt und angepasst werden, wodurch sich die Qualität des Fahrzeugreifens verbessert.

Die Fertigungseinheit ist dazu ausgebildet, die extrudierte Kautschukmischung auszuformen und die Komponenten des ersten und zweiten Profils miteinander zu verbinden. Außerdem wird in der Fertigungseinheit die im Wesentlichen finale Geometrie der beiden Profile erreicht. Vorzugsweise ist eine Fertigungseinheit eine Schablone, wobei eine Schablone mindestens zwei Öffnungen aufweist. Besonders bevorzugt wird eine Vorschablone eingesetzt, um die extrudierte Kautschukmischung auszuformen, wobei die Komponente entsteht. Die Komponenten werden dann mittels der Vorschablone gleichzeitig zusammengeführt. Dafür entspricht die Anzahl der Öffnungen beziehungsweise der Fließkanäle in der Vorschablone der Anzahl der Extruder, da jeder Extruder eine Komponente erzeugt, die durch die Vorschablone hindurchfließt. Ferner besonders bevorzugt ist eine Schablone eine Endschablone, durch die die Komponenten verbunden werden und die finale Geometrie erreicht wird. Die Endschablone mindestens zwei Öffnungen auf. Die Anzahl der Öffnungen der Endschablone entspricht der Anzahl der Profile. In einer bevorzugten Ausführungsform umfasst die Vorrichtung im Anschluss des Extruders eine Vorschablone und eine Endschablone, um die Komponenten zu formen, zusammenzuführen und zu verbinden.

Vorzugsweise bezieht sich die Vorrichtung, vice versa, auf das bereits beschriebene Verfahren. Entsprechend gelten die Ausführungen in Bezug auf das Verfahren ebenfalls für die Vorrichtung, soweit eine Kombination für einen Fachmann technisch sinnvoll ist.

In einer weiteren bevorzugten Ausführungsform umfasst die Vorrichtung eine Steuereinheit zur Steuerung mindestens eines Parameters umfasst, wobei der Parameter ausgewählt ist aus der Gruppe bestehend aus Gewicht, Druck, Geometrie und Temperatur, wobei die Steuereinheit besonders bevorzugt dazu ausgebildet ist, die Herstellung des ersten und des zweiten Profils separat zu steuern. Die erfindungsgemäße Steuereinheit kann mit den Extrudern und/oder mit der Fertigungseinheit und/oder mit einer Fördereinheit, beispielsweise einer Schrumpfrollenbahn, verbunden sein und diese steuern. Über die Steuereinheit können die beschriebenen Parameter angepasst werden, wodurch sich gewisse Eigenschaften der extrudierten Kautschukmischung und/oder der Profile ändern. Eine besonders bevorzugte separate Steuerung der einzelnen Fertigungslinien ist vorteilhaft, da die Profile einander angepasst werden können.

Ferner bevorzugt umfasst die Vorrichtung mindestens eine Fördereinheit, beispielsweise eine Schrumpfrollenbahn, durch die die Komponenten und/oder die Profile zumindest teilweise schrumpfbar sind, wobei jede Fertigungslinie besonders bevorzugt jeweils eine Fördereinheit umfasst. Vorteilhafterweise kann eine Schrumpfrollen die Komponenten und/oder die Profile schrumpfen, sodass die Eigenschaften über den Schrumpfprozess angepasst werden können. In einer besonders bevorzugten Ausführungsform weist jede Fertigungslinie eine eigene Schrumpfrollenbahn auf, sodass die Eigenschaften über den Schrumpfprozess unabhängig aneinander angepasst werden können.

Weiter bevorzugt umfasst die Vorrichtung mindestens eine Messeinheit, durch die die Parameter der ersten und zweiten Komponente und/oder des ersten und zweiten Profils separat messbar ist, vorzugsweise das Gewicht und/oder die Geometrie. Vorteilhafterweise können die beschriebenen Parameter einzeln und unabhängig gemessen werden und durch die beschriebene Steuereinheit korrigiert werden. Insgesamt kann die Qualität der beiden Profile somit deutlich verbessert werden.

Für die Herstellung von zwei Seitenwänden umfasst die Vorrichtung in einer bevorzugten Weiterbildung vier Extruder, die unabhängig voneinander gesteuert werden können. Jede Seitenwand kann somit bis zu zwei Komponenten aufweisen, da über die vier Extruder jeweils eine Komponente erzeugt wird. Für die Erzeugung und das Zusammenführen der Komponenten weist die Vorrichtung mindestens eine Vorschablone mit mindestens vier Öffnungen auf. Das Verbinden der Komponenten erfolgt anschließend in der mindestens einen Endschablone, die zwei Öffnungen aufweist. Danach werden die endlosen Kautschukstreifen jeweils für die erste und zweite Seitenwand auf einer eigenen Schrumpfrollenbahn einem Schrumpfprozess unterworfen, bis die beiden Seitenwände die finalen Eigenschaften erreicht haben.

Weitere Vorteile und Merkmale des erfindungsgemäßen Verfahrens sowie der erfindungsgemäßen Vorrichtung ergeben sich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche, soweit diese technisch möglich sind, auch wenn sich die Unteransprüche nicht aufeinander beziehen oder wenn diese verschiedenen Anspruchskategorien zugehören. Ferner sind auch Kombinationen von bevorzugten und besonders bevorzugten Ausführungsformen untereinander miteinander kombinierbar, soweit diese technisch möglich sind. Dies gilt auch für die einzelnen Merkmale der nachfolgend diskutierten Ausführungsbeispiele, soweit diese nicht für den Fachmann als zwingend zueinander gehörig erkennbar sind.

### Figurenbeschreibung

Weitere Einzelheiten und Vorteile der vorliegenden Erfindung ergeben sich aus der nachfolgenden Beschreibung der Ausführungsführungsbeispiele in Verbindung mit den Zeichnungen. In diesen zeigen
- Figur 1: eine schematische Darstellung einer Ausführungsform der erfindungsgemäßen Vorrichtung zur Herstellung von zwei Verstärkungen einer Seitenwand für einen Fahrzeugreifen und
- Figur 2: eine schematische Darstellung einer Ausführungsform der erfindungsgemäßen Vorrichtung zur Herstellung von zwei Seitenwänden für einen Fahrzeugreifen.

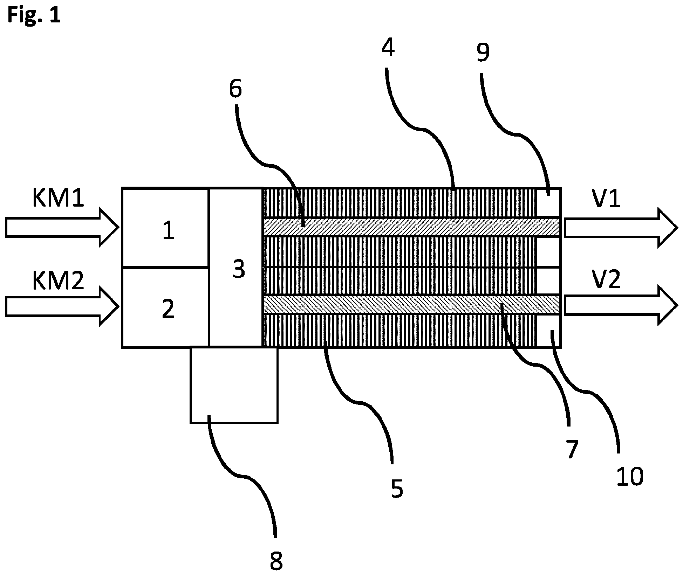

Figur 1 zeigt eine Ausführungsform der erfindungsgemäßen Vorrichtung zur Herstellung von zwei Verstärkungen V1, V2 für die Seitenwände eines Fahrzeugreifens. Die Vorrichtung umfasst eine erste Fertigungslinie zur Herstellung der ersten Verstärkung V1 und eine zweite Fertigungslinie zur Herstellung der zweiten Verstärkung V2 mit einem ersten und zweiten Extruder 1, 2, einer Schablone 3 und eine erste und zweite Schrumpfrollenbahn 4, 5. Die Schablone 3 weist zwei Öffnungen auf, durch die extrudierten Kautschukmischungen aus den Extrudern 1,2 jeweils zu einem endlosen Kautschukstreifen für die beiden Verstärkungen V1, V2 geformt werden.

In den ersten Extruder 1 wird eine erste Kautschukmischung KM1 eingeführt und extrudiert, wobei ein endloser Kautschukstreifen in Form einer Komponente entsteht, die anschließend in der Schablone 3 durch eine erste Öffnung hinsichtlich der Geometrie geformt wird. Auf der anschließenden ersten Schrumpfrollenbahn 4 wird die Komponente in Form eines endlosen Kautschukstreifens 6 einem Schrumpfprozess unterworfen, wodurch die erste Verstärkung V1 der Seitenwand letztendlich finalisiert wird.

Die zweite Fertigungslinie verläuft im Wesentlichen parallel zur ersten Fertigungslinie, wobei eine zweite Kautschukmischung KM2 in den zweiten Extruder 2 eingeführt und extrudiert wird. Der entstandene endlose Kautschukstreifen 7 in Form einer Komponente wird in der Schablone 4 durch eine zweite Öffnung hinsichtlich der Geometrie geformt und anschließend in der zweiten Schrumpfrollenbahn 5 einem Schrumpfprozess unterworfen, sodass final die zweite Verstärkung V2 der Seitenwand entsteht.

Ferner weist die Vorrichtung eine Steuereinheit 8 auf, die mit beiden Extrudern 1, 2 und mit beiden Schrumpfrollenbahnen 4, 5 verbunden ist. Über die Steuereinheit 8 können einzelne Parameter der Verstärkungen V1, V2 im Herstellungsprozess unabhängig verändert werden. Beispielsweise können das Gewicht und die Geometrie der Verstärkungen V1, V2 einander angepasst werden oder die Temperatur in einem Extruder 1, 2 unabhängig erhöht oder erniedrigt werden. Für die Messung der Parameter weist die Vorrichtung eine zwei Messeinheiten 9, 10 auf. Diese können beispielsweise das Gewicht der Verstärkungen kontrollieren. Bei Unregelmäßigkeiten zwischen den beiden Verstärkungen V1, V2 steuert die Steuereinheit 8 die Extruder 1, 2 oder die Schrumpfrollenbahnen 4, 5, um die Eigenschaften aneinander anzupassen.

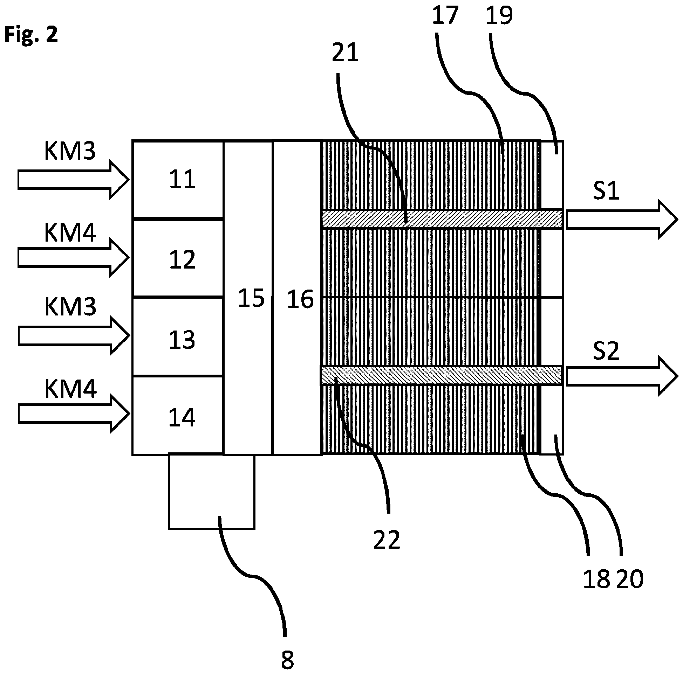

Figur 2 zeigt eine Ausführungsform der erfindungsgemäßen Vorrichtung zur Herstellung von zwei Seitenwänden S1, S2 für einen Fahrzeugreifen. Die Vorrichtung weist vier Extruder 11, 12, 13, 14, eine Vorschablone 15 mit vier Öffnungen, eine Endschablone 16 mit zwei Öffnungen, zwei Schrumpfrollenbahnen 17, 18, eine Steuereinheit 8 und zwei Messeinheiten 19, 20 auf. Die Kautschukmischungen KM3, KM4 werden in dem jeweiligen Extruder 11, 12, 13, 14 eingeführt und extrudiert, wobei die Komponenten durch die Vorschablone 15 gebildet und zusammengeführt werden. Pro Extruder 11, 12, 13, 14 wird eine Komponente erzeugt, die in der Endschablone 16 miteinander verbunden werden. Die Endschablone weist zwei Öffnungen auf, durch die die Geometrie der beiden Seitenwände S1, S2 im Wesentlichen erreicht wird. Anschließend werden die zusammengeführten Komponenten als endloser Kautschukstreifen 21, 22 für die jeweilige Seitenwand S1, S2 auf einer jeweiligen Schrumpfrollenbahn 17, 18 einem Schrumpfprozess unterworfen.

Ferner werden die Prozesse über die Messeinheiten 19, 20 separat überwacht. Die Steuereinheit 8 steuert beispielsweise die Extruder 11, 12, 13, 14 und/oder die Schrumpfrollenbahnen 17, 18, wobei die Steuerung analog wie ausgeführt in Bezug auf die Figur 1 erfolgt. Zusätzlich ist die Steuereinheit 8 mit den Messeinheiten 19, 20 verbunden, da diese die Eigenschaften beziehungsweise Parameter der endlosen Kautschukstreifen 21, 22 misst und bei Unregelmäßigkeiten in Bezug auf das Gewicht oder die Geometrie diese individuell angepasst werden.

### Bezugszeichenliste

- 1: erster Extruder für die erste Verstärkung
- 2: zweite Extruder für die zweite Verstärkung
- 3: Schablone
- 4: erste Schrumpfrollenbahn für die erste Verstärkung
- 5: zweite Schrumpfrollenbahn für die zweite Verstärkung
- 6: erster endloser extrudierter Kautschukstreifen
- 7: zweiter endloser extrudierter Kautschukstreifen
- 8: Steuereinheit
- 9: erste Messeinheit
- 10: zweite Messeinheit
- 11: erster Extruder für die erste Seitenwand
- 12: zweiter Extruder für die erste Seitenwand
- 13: dritter Extruder für die zweite Seitenwand
- 14: vierter Extruder für die zweite Seitenwand
- 15: Vorschablone
- 16: Endschablone
- 17: erste Schrumpfrollenbahn für die erste Seitenwand
- 18: zweite Schrumpfrollenbahn für die erste Seitenwand
- 19: erste Messeinheit für die Seitenwand
- 20: zweite Messeinheit für die Seitenwand
- 21: erster endloser extrudierter Kautschukstreifen
- 22: zweiter endloser extrudierter Kautschukstreifen

- KM1: erste Kautschukmischung für die erste Verstärkung
- KM2: zweite Kautschukmischung für die zweite Verstärkung
- KM3: erste Kautschukmischung für die Seitenwand
- KM4: zweite Kautschukmischung für die Seitenwand
- V1: erste Verstärkung der Seitenwand
- V2: zweite Verstärkung der Seitenwand
- S1: erste Seitenwand
- S2: zweite Seitenwand

## Patentansprüche

1. Verfahren zur Herstellung von mindestens zwei Profilen (V1, V2, S1, S2) eines Fahrzeugreifens,
wobei mindestens das erste und zweite Profil (V1, V2, S1, S2) jeweils mindestens eine Komponente umfassen und parallel hergestellt werden,
**gekennzeichnet durch** folgende Schritte:
1a) Herstellen der mindestens einen Komponente des ersten Profils (V1, S1) durch Extrudieren mindestens einer ersten Kautschukmischung (KM1, KM3, KM4),
1b) Herstellen des ersten Profils (V1, S1), welches die mindestens eine Komponente aufweist, die mindestens die erste Kautschukmischung(KM1, KM3, KM4) umfasst,
2a) Herstellen der mindestens einen Komponente des zweiten Profils (V2, S2) durch Extrudieren mindestens einer zweiten Kautschukmischung (KM2, KM3, KM4) und
2b) Herstellen des zweiten Profils (V2, S2), welches die mindestens eine Komponente aufweist, die mindestens die zweite Kautschukmischung (KM2, KM3, KM4) umfasst.

2. Verfahren nach Anspruch 1, **dadurch gekennzeichnet, dass** die mindestens erste Kautschukmischung (KM1, KM3, KM4) und die mindestens zweite Kautschukmischung (KM2, KM3, KM4) identisch sind.

3. Verfahren nach Anspruch 1 oder 2, **dadurch gekennzeichnet, dass** die mindestens eine Komponente des ersten Profils (V1, S1) und die mindestens eine Komponente des zweiten Profils identisch sind, vorzugsweise sind das erste und zweite Profil (V1, V2, S1, S2) identisch.

4. Verfahren nach einem der vorherigen Ansprüche, **dadurch gekennzeichnet, dass** die erste und zweite extrudierte Kautschukmischung (KM1, KM2, KM3, KM4) und/oder das erste und zweite Profil (V1, V2, S1, S2) einem Schrumpfprozess unterworfen werden, insbesondere auf mindestens einer Schrumpfrollenbahn (4, 5, 17, 18).

5. Verfahren nach einem der vorherigen Ansprüche, **dadurch gekennzeichnet, dass** mindestens zwei parallele Schritte mittels einer Steuereinheit (8) steuerbar sind, wobei vorzugsweise mindestens ein Verfahrensschritt des ersten Profils (V1, S1) von mindestens einem des zweiten Profils (V2, S2) separat steuerbar ist.

6. Verfahren nach Anspruch 5, **dadurch gekennzeichnet, dass** mindestens ein Parameter ausgewählt aus der Gruppe bestehend aus Gewicht, Druck, Geometrie und Temperatur steuerbar ist.

7. Vorrichtung zur Herstellung von mindestens zwei Profilen (V1, V2, S1, S2) eines Fahrzeugreifens, insbesondere unter Anwendung eines Verfahrens nach einem der Ansprüche 1 bis 6, umfassend jeweils eine Fertigungslinie für die parallele Herstellung eines jeden Profils (V1, V2, S1, S2) mit jeweils mindestens einer Komponente,
**dadurch gekennzeichnet, dass**
die erste Fertigungslinie mindestens einen ersten Extruder (1, 11, 12) zur Herstellung der mindestens einen Komponente des ersten Profils (V1, S1) und mindestens eine Fertigungseinheit (3, 15, 16) zur Fertigung des ersten Profils (V1, S1) aus den Komponenten umfasst und
die zweite Fertigungslinie mindestens einen zweiten Extruder (2, 13, 14) zur Herstellung der Komponente des zweiten Profils (V2, S2) und die mindestens eine Fertigungseinheit (3, 15, 16) zur Fertigung des zweiten Profils (V2, S2) umfasst.

8. Vorrichtung nach Anspruch 7, **dadurch gekennzeichnet, dass** die Vorrichtung eine Steuereinheit (8) zur Steuerung mindestens eines Parameters umfasst, wobei der Parameter ausgewählt ist aus der Gruppe bestehend aus Gewicht, Druck, Geometrie und Temperatur, wobei die Steuereinheit (8) vorzugsweise dazu ausgebildet ist, die Herstellung des ersten und des zweiten Profils (V1, V2, S1, S2) separat zu steuern.

9. Vorrichtung nach Anspruch 7 oder 8, **dadurch gekennzeichnet, dass** die Vorrichtung mindestens eine Fördereinheit (4, 5, 17, 18), insbesondere eine Schrumpfrollenbahn (4, 5, 17, 18), umfasst, durch die die Profile (V1, V2, S1, S2) zumindest teilweise schrumpfbar sind, wobei jede Fertigungslinie vorzugsweise jeweils eine Fördereinheit (4, 5, 17, 18) umfasst.

10. Vorrichtung nach einem der Ansprüche 7 bis 9, **dadurch gekennzeichnet, dass** die Vorrichtung mindestens eine Messeinheit (9, 10, 19, 20) umfasst, durch die die Parameter der ersten und zweiten Komponente und/oder des ersten und zweiten Profils (V1, V2, S1, S2) separat messbar sind, vorzugsweise das Gewicht und/oder die Geometrie.

## Claims

1. Method for producing at least two profiles (V1, V2, S1, S2) of a vehicle tyre, at least the first and second profiles (V1, V2, S1, S2) respectively comprising at least one component and being produced in parallel,
**characterized by** the following steps:
1a) producing the at least one component of the first profile (V1, S1) by extruding at least a first rubber compound (KM1, KM3, KM4),
1b) producing the first profile (V1, S1), which has the at least one component which comprises at least the first rubber compound (KM1, KM3, KM4),
2a) producing the at least one component of the second profile (V2, S2) by extruding at least a second rubber compound (KM2, KM3, KM4) and
2b) producing the second profile (V2, S2), which has the at least one component which comprises at least the second rubber compound (KM2, KM3, KM4).

2. Method according to Claim 1, **characterized in that** the at least first rubber compound (KM1, KM3, KM4) and the at least second rubber compound (KM2, KM3, KM4) are identical.

3. Method according to Claim 1 or 2, **characterized in that** the at least one component of the first profile (V1, S1) and the at least one component of the second profile are identical, preferably the first and second profiles (V1, V2, S1, S2) are identical.

4. Method according to one of the preceding claims, **characterized in that** the first and second extruded rubber compounds (KM1, KM2, KM3, KM4) and/or the first and second profiles (V1, V2, S1, S2) are subjected to a shrinking process, in particular on at least one shrink roller conveyor (4, 5, 17, 18).

5. Method according to one of the preceding claims, **characterized in that** at least two parallel steps are controllable by means of a control unit (8), preferably at least one method step of the first profile (V1, S1) being controllable separately from at least one method step of the second profile (V2, S2).

6. Method according to Claim 5, **characterized in that** at least one parameter selected from the group consisting of weight, pressure, geometry and temperature is controllable.

7. Device for producing at least two profiles (V1, V2, S1, S2) of a vehicle tyre, in particular by using a method according to one of Claims 1 to 6, respectively comprising a production line for the parallel production of each profile (V1, V2, S1, S2) with at least one component in each case,
**characterized in that**
the first production line comprises at least a first extruder (1, 11, 12) for producing the at least one component of the first profile (V1, S1) and at least one production unit (3, 15, 16) for producing the first profile (V1, S1) from the components and the second production line comprises at least a second extruder (2, 13, 14) for producing the component of the second profile (V2, S2) and the at least one production unit (3, 15, 16) for producing the second profile (V2, S2).

8. Device according to Claim 7, **characterized in that** the device comprises a control unit (8) for controlling at least one parameter, the parameter being selected from the group consisting of weight, pressure, geometry and temperature, the control unit (8) preferably being designed to control the production of the first and second profiles (V1, V2, S1, S2) separately.

9. Device according to Claim 7 or 8, **characterized in that** the device comprises at least one conveying unit (4, 5, 17, 18), in particular a shrink roller conveyor (4, 5, 17, 18), by which the profiles (V1, V2, S1, S2) can be at least partially shrunk, each production line preferably comprising one conveying unit (4, 5, 17, 18) in each case.

10. Device according to one of Claims 7 to 9, **characterized in that** the device comprises at least one measuring unit (9, 10, 19, 20), by which the parameters of the first and second components and/or of the first and second profiles (V1, V2, S1, S2), preferably the weight and/or the geometry, can be measured separately.

## Revendications

1. Procédé de réalisation d'au moins deux sculptures (V1, V2, S1, S2) d'un pneumatique de véhicule,
au moins les première et deuxième sculptures (V1, V2, S1, S2) comprenant chacun au moins un composant et étant réalisés en parallèle,
**caractérisé par** les étapes suivantes :
1a) réaliser l'au moins un composant de la première sculpture (V1, S1) par extrusion d'au moins un premier mélange de caoutchoucs (KM1, KM3, KM4),
1b) réaliser la première sculpture (V1, S1) qui comporte l'au moins un composant qui comprend au moins le premier mélange de caoutchoucs (KM1, KM3, KM4),
2a) réaliser l'au moins un composant de la deuxième sculpture (V2, S2) par extrusion de l'au moins un deuxième mélange de caoutchoucs (KM2, KM3, KM4) et
2b) réaliser la deuxième sculpture (V2, S2) qui comporte l'au moins un composant qui comprend au moins le deuxième mélange de caoutchoucs (KM2, KM3, KM4).

2. Procédé selon la revendication 1, **caractérisé en ce que** l'au moins premier mélange de caoutchoucs (KM1, KM3, KM4) et l'au moins un deuxième mélange de caoutchoucs (KM2, KM3, KM4) sont identiques.

3. Procédé selon la revendication 1 ou 2, **caractérisé en ce que** l'au moins un composant de la première sculpture (V1, S1) et l'au moins un composant de a deuxième sculpture sont identiques, de préférence la première et la deuxième sculpture (V1, V2, S1, S2) sont identiques.

4. Procédé selon l'une des revendications précédentes, **caractérisé en ce que** le premier et le deuxième mélange de caoutchoucs extrudé (KM1, KM2, KM3, KM4) et/ou la première et la deuxième sculpture (V1, V2, S1, S2) sont soumis à un processus de rétraction, en particulier sur au moins une bande de rouleau rétractable (4, 5, 17, 18).

5. Procédé selon l'une des revendications précédentes, **caractérisé en ce qu'**au moins deux étapes parallèles peuvent être commandées au moyen d'une unité de commande (8), de préférence au moins une étape de procédé de la première sculpture (V1, S1) pouvant être commandée séparément d'au moins un des deuxièmes sculptures (V2, S2).

6. Procédé selon la revendication 5, **caractérisé en ce qu'**au moins un paramètre choisi dans le groupe comprenant le poids, la pression, la géométrie et la température peut être commandé.

7. Dispositif de réalisation d'au moins deux sculptures (V1, V2, S1, S2) d'un pneumatique de véhicule, notamment par mise en oeuvre d'un procédé selon l'une des revendications 1 à 6, ledit dispositif comprenant à chaque fois une ligne de fabrication destinée à la fabrication en parallèle de chaque sculpture (V1, V2, S1, S2) avec à chaque fois au moins un composant,
**caractérisé en ce que**
la première ligne de fabrication comprend au moins une première extrudeuse (1, 11, 12) destinée à réaliser l'au moins un composant de la première sculpture (V1, S1) et au moins une unité de réalisation (3, 15, 16) destinée à réaliser la première sculpture (V1, S1) à partir des composants et
la deuxième ligne de fabrication comprend au moins une deuxième extrudeuse (2, 13, 14) destinée à réaliser le composant de la deuxième sculpture (V2, S2) et l'au moins une unité de réalisation (3, 15, 16) pour destinée à réaliser la deuxième sculpture (V2, S2).

8. Dispositif selon la revendication 7, **caractérisé en ce que** le dispositif comprend une unité de commande (8) destinée à commander au moins un paramètre,
le paramètre étant choisi dans le groupe comprenant le poids, la pression, la géométrie et la température, l'unité de commande (8) étant de préférence conçue pour commander séparément la réalisation de la premier et de la deuxième sculpture (V1, V2, S1, S2).

9. Dispositif selon la revendication 7 ou 8, **caractérisé en ce que** le dispositif comprend au moins une unité de transport (4, 5, 17, 18), notamment une bande à rouleaux rétractables (4, 5, 17, 18), permettant de rétracter au moins partiellement les sculptures (V1, V2, S1, S2), chaque ligne de fabrication comprenant de préférence une unité de transport (4, 5, 17, 18).

10. Dispositif selon l'une des revendications 7 à 9, **caractérisé en ce que** le dispositif comprend au moins une unité de mesure (9, 10, 19, 20) permettant de mesurer séparément les paramètres des premier et deuxième composants et/ou des première et deuxième sculptures (V1, V2, S1, S2), de préférence le poids et/ou la géométrie.
